# EUROPÄISCHE PATENTSCHRIFT

(11) **EP 1 014 063 B1**
(45) Veröffentlichungstag und Bekanntmachung des Hinweises auf die Patenterteilung: **27.03.2002**
(21) Anmeldenummer: 99250411.8
(22) Anmeldetag: 22.11.1999
(51) Int. Cl.: G01L 1/02, G01L 1/26, G01L 1/08

(54) **Kraftaufnehmer**
Force measuring device
Dispositif de mesure de force

(30) Priorität: 16.12.1998 DE 29822269 U
(43) Veröffentlichungstag der Anmeldung: 28.06.2000
(73) Patentinhaber: MANNESMANN Aktiengesellschaft, 40213 Düsseldorf (DE)
(72) Erfinder: Bittenbinder,Wolfgang, 73469 Riesbürg-Utzmemmingen (DE); Kühn,Robert,Dr., 86756 Reimlingen (DE)
(74) Vertreter: Meissner, Peter E., Dipl.-Ing.

(56) Entgegenhaltungen:
- DE-A- 4 415 518

## Beschreibung

Die Erfindung betrifft einen Kraftaufnehmer zur Messung einer Zugkraft in einer pneumatischen Einrichtung gemäss dem Oberbegriff des Anspruchs 1.

Es ist allgemein bekannt, Kraftaufnehmer zur Messung einer Zugkraft zur Verwendung in einer pneumatischen Einrichtung mit einem Gelenkparallelogramm zu versehen. Dieses Gelenkparallelogramm besteht aus zwei vertikalen Längslenkern und zwei horizontalen Querlenkern, wobei die parallel zueinander verlaufenden Querlenker gelenkig mit den parallelen Längslenkern verbunden sind. Die Längslenker erstrecken sich parallel zur Richtung der Zugkraft, die am unteren Ende eines der beiden Längslenker angreift und diese in Richtung der Zugkraft bewegt. Der andere Längslenker ist mit seinem oberen Ende beispielsweise an einem Zugmittel befestigt. Zur Erzeugung eines zugkraftabghängigen pneumatischen Drucksignals ist ein zwischen den beiden Querlenkern angeordneter Messfühler vorgesehen, der mit seinem Gehäuse an einem der Längslenker befestigt ist. Aus dem Messfühlergehäuse ragt ein Druckbolzen heraus, der von einem Querträger in Abhängigkeit von der Zugkraft kraftbeaufschlagt wird, welcher an dem nach unten bewegbaren Längslenker fest angeordnet ist.

Die pneumatische Hubeinrichtung kann beispielsweise ein Hebegerät oder auch eine Zugspannungsregelung in einer Aufwickelvorrichtung sein. Als Messfühler kann ein Kompressionsmodul oder ein Feindruckregler zum Einsatz kommen.

Solche bekannten Kraftaufnehmer können konstruktionsbedingt nur bis zu einem bestimmten Grenzwert belastet werden und damit verbunden einen dazu proportionalen Grenzsteuerdruck abgeben. Folglich ist der praktische Einsatz solcher Kraftaufnehmer relativ eng begrenzt. Hebegeräte-Hersteller sind folglich gezwungen, bei unterschiedlicher Tragkraft entsprechend unterschiedliche Kraftaufnehmer vorrätig zu haben.

Der Erfindung liegt die Aufgabe zugrunde, den Kraftaufnehmer so weiterzubilden, dass er für Hebegeräte unterschiedlicher Tragkraft einsetzbar ist.

Die Lösung dieser Aufgabe ist durch die im Anspruch 1 angegebenen Merkmale gegeben. Durch die kennzeichnenden Merkmale der Unteransprüche 2 bis 7 ist der Kraftaufnehmer in vorteilhafter Weise weiter ausgestaltet.

Die Lösung sieht vor, dass mindestens ein erstes elastisches Element mit mindestens zwei der Lenker (Längs- und/oder Querlenker) derart verbunden ist, dass die zugkraftbedingte Bewegung des zweiten Längslenkers gegen eine von diesem Element bewirkte elastische Kraft erfolgt, und dass das mit mindestens einem zweiten elastischen Element in Reihe geschaltete Fühlerelement am Beaufschlagungselement abgestützt ist. Auf diese Weise wird die wirksame Zugkraft in zwei Teile aufgeteilt, wobei ein erster Teil der zu messenden Zugkraft über den Kraftfühler und ein zweiter Teil unmittelbar an dem Gelenkparallelogramm abgestützt ist. Der Kraftaufnehmer lässt sich so ausbilden, dass ausschließlich Kraftwirkungen aus der Zugkraft auf den Messfühler einwirken, dagegen eventuell auftretende Seitenkräfte und/oder Kippmomente den Messfühler nicht beeinflussen. Insgesamt arbeitet der Kraftaufnehmer rückwirkungsfrei.

Die Aufteilung der Kräfte kann beispielsweise so erfolgen, dass nur die halbe Zugkraft am Messfühler wirksam ist, was mit einer Verdopplung der Höchstbelastbarkeit des Kraftaufnehmers verbunden ist.

Um den Kraftaufnehmer an unterschiedliche Hebezeuge anpassen zu können, ist der am Kraftfühler wirksame Teil der Zugkraft einstellbar, indem die örtliche Lage des ersten elastischen Elements als Abstützung am Längsträger längsverschiebbar und arretierbar ist.

Zum Schutz bei einer Überlast ist an dem Längsträger, an dem sich das erste elastische Element abstützt, eine Schraube befestigt, die zwei beabstandete Anschläge aufweist, welche die Querverschiebung des Längsträgers bezogen auf die vertikale Mittenebene des Parallelogramms begrenzt. Diese einfach zu realisierende Maßnahme bewirkt, dass einerseits bei Staukräften am Kraftaufnehmer ein Abheben der Federn und andererseits eine Überlastung des Messfühlers verhindert wird, wenn zu hohe Zugkräfte am Kraftaufnehmer angreifen.

Mittels einer Tellerfeder als elastisches Element wird ein kleinbauender Kraftaufnehmer erzielt.

Ein Ausführungsbeispiel der Erfindung ist in der Zeichnung dargestellt und wird nachfolgend näher beschrieben. Es zeigen:
- Fig. 1: ein pneumatisches Hebegerät in einer schematischen Darstellung,
- Fig. 2: einen pneumatischen Kraftaufnehmer in einem Längsschnitt,
- Fig. 3: eine Ausgestaltung des Kraftaufnehmers gemäss Fig. 2 und
- Fig. 4: ein Kraft-Steuerdruck-Diagramm.

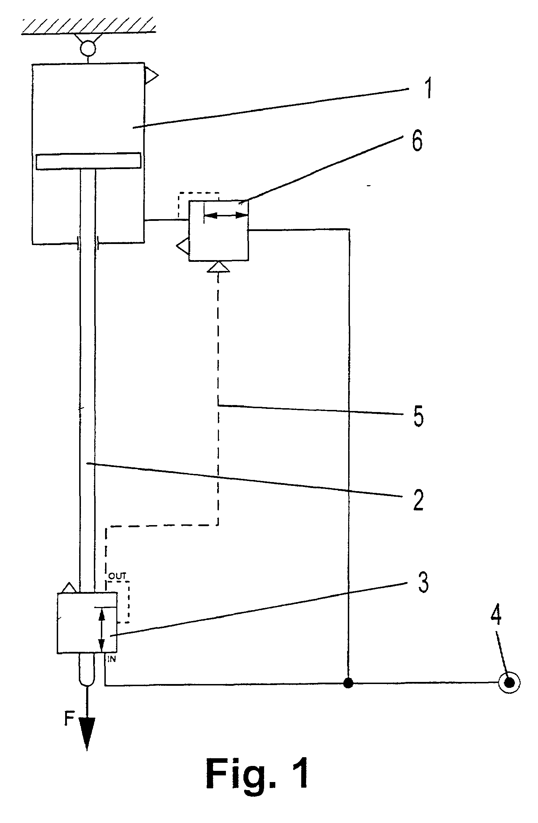

Das in Fig. 1 schematisch dargestellte Hebegerät besteht aus einem pneumatischen Zylinder 1, dessen verlängerte Kolbenstange 2 an ihrem unteren Ende eine nicht dargestellte Last trägt, aus der die Zugkraft F resultiert. In die Kolbenstange 2 ist der pneumatische Kraftaufnehmer 3 integriert, der von einer Druckluftquelle 4 gespeist wird und der über eine Steuerleitung 5 ein der Zugkraft F proportionales Steuersignal (Steuerdruck) an das Druckregelventil 6 abgibt, welches ebenfalls aus der Druckluftquelle 4 versorgt wird und die Druckluft mit einem dem Steuersignal entsprechenden Druck an den Zylinder 1 weiterleitet.

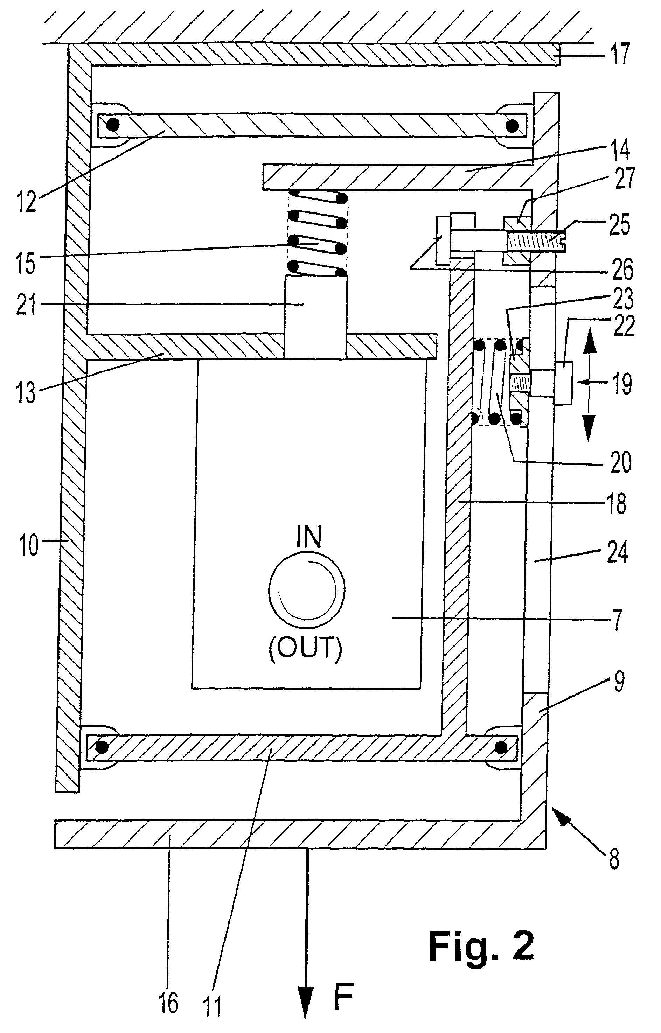

Der in Fig. 2 in einem Längsschnitt dargestellte Kraftaufnehmer besteht einerseits aus einem Messfühler 7 und andererseits aus einer mechanischen Struktur 8, die aus zwei parallel zur Zugkraftrichtung (F) verlaufenden Längslenkem 9, 10 gebildet ist, welche an ihren Enden jeweils gelenkig mit zwei quer zur Kraftrichtung verlaufenden Querlenkern 11, 12 unter Bildung eines Gelenkparallelogramms verbunden sind.

Jeder der beiden Längslenker 9, 10 weist innerhalb des Parallelogramms einen fest mit ihm verbundenen Querträger 13, 14 auf, die im axialen Abstand voneinander angeordnet sind. Der Messfühler 7 ist am Querträger 13 befestigt.

Außerhalb des Parallelogramms weist jeder Längslenker 9, 10 je eine fest mit ihm verbundene Querabstützung 16, 17 auf, wobei an der unteren Querabstützung 16 die zu messende Zugkraft F angreift. Eine gleichgroße Gegenkraft greift oben an der Querabstützung 17 an. Diese Ausbildung der mechanischen Struktur 8 führt dazu, dass der Messfühler 7 nur die Zugkräfte F, nicht jedoch andere Momente M erfasst.

Weiter zeigt Fig. 2 innerhalb des Parallelogramms einen parallel zum Längslenker 9 verlaufenden Längsträger 18, der mit seinem unteren Ende am Querlenker 11 befestigt ist. Zwischen dem Längsträger 18 und dem Längslenker 9 sind eine Abstützung 19 und eine Druckfeder 20 als erstes elastisches Element in Reihe angeordnet.

Als zweites elastisches Element befindet sich eine weitere Druckfeder 15 zwischen dem Messfühler 7 und dem Querträger 14. Diese ist einem Fühlerelement 21 unmittelbar vor- oder nachgeschaltet, welches aus dem Messfühlergehäuse des Messfühlers 7 herausragt. Selbstverständlich befindet sich die Druckfeder 15 bei Nachschaltung im Messfühlergehäuse. Wesentlich ist, dass die Druckfeder 15 mit dem Fühlerelement 21 in Reihe angeordnet ist und von dem Längslenker 9 als Beaufschlagungselement in Abhängigkeit von der Zugkraft (F) kraftbeaufschlagbar ist, wobei die Kraftbeaufschlagung über den am Längslenker 9 angeordneten Querträger 14 erfolgt. (Als Beaufschlagungselemente kommen selbstverständlich auch einer der beiden Querlenker 11, 12 in Frage.)

Durch diese Ausgestaltung wird die Zugkraft F in eine erste und eine zweite Teilkraft zerlegt, wobei die erste Teilkraft über der Druckfeder 15 am Messfühler 7 und die zweite Teilkraft über die Druckfeder 20 am Längslenker 9 der mechanischen Struktur 8 abgestützt wird. Das Verhältnis der beiden Teilkräfte zueinander kann durch eine Längsverschiebung der Abstützung 19 längs des Längslenkers 9 in einem großen Bereich eingestellt werden.

In Fig. 2 ist die Abstützung 19 durch eine Schraube 22 gebildet, die in ein Innengewinde eines Federtellers 23 eingreift, welcher seinerseits die Druckfeder 20 abstützt. Die Schraube 22 ist in einem Längsschlitz 24 des Längslenkers 9 verschiebbar geführt. Durch Anziehen der Schraube 22 kann die Abstützung 19 in jeder gewünschten Position fixiert werden. Ferner ist an dem Längslenker 9 eine Schraube 25 befestigt, die zwei beabstandete Anschläge aufweist, nämlich den Schraubenbund 26 einerseits und eine auf die Schraube 25 aufgesetzte Abstandsscheibe 27 andererseits, wobei die Schraube durch eine Ausnehmung des Längsträgers 18 hindurchgreift, dabei den Längsträger 18 zwischen den Anschlägen aufnimmt und so den Ausschlag bzw. die Querverschiebung des Längsträgers 18 begrenzt.

Mittels als Tellerfeder ausgebildeten Druckfedern 15, 20 ist der Kraftaufnehmer kleinbauend ausführbar.

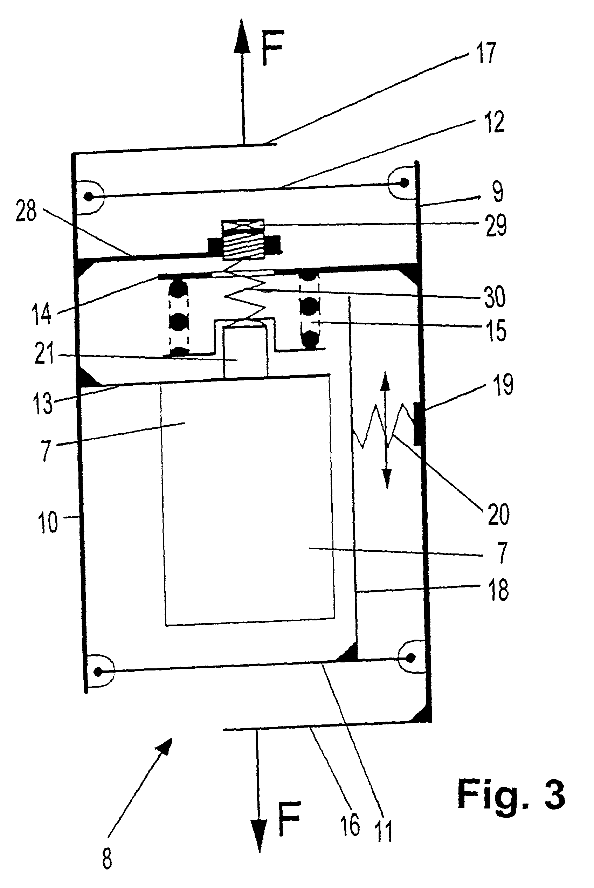

Fig. 3 zeigt schematisch eine weitere Ausgestaltung des Ausführungsbeispiels, wobei an dem Längslenker 10, der den Querträger 13 trägt, ein zusätzlicher querverlaufender Träger 28 vorgesehen ist. Dieser trägt eine Stellschraube 29, die auf eine Schraubenfeder 30 wirkt, welche dem Messfühler 7 (Fühlerelement 21) eine Vorspannung erteilt.

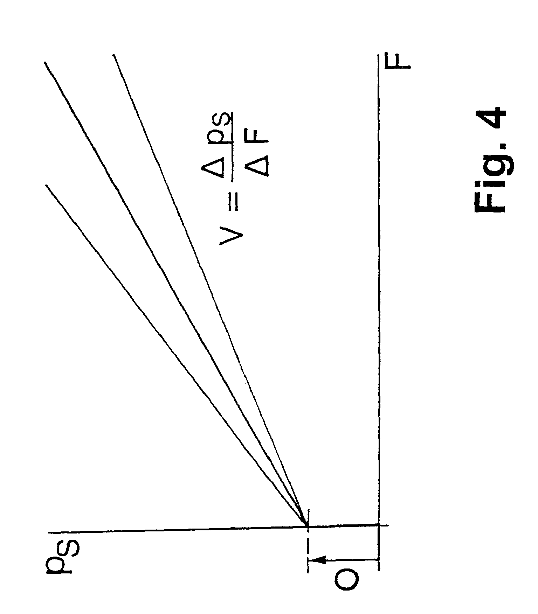

Fig. 4 zeigt den Streuerdruckverlauf des zuletzt beschriebenen Kraftaufnehmers. Durch Änderung der durch die Stellschraube 29 hervorgerufenen Vorspannung der Druckfeder 30 ergibt sich eine Parallelverschiebung O (Offset) des Steuerdruckverlaufs (Steuerdruck ps) und durch Verschiebung der Abstützung 19 mit der Druckfeder 20 entlang dem Längsträger 9 kann die Steigung (Verstärkung V) des Steuerdruckverlaufs geändert werden. Auf diese Weise ist der Kraftaufnehmer an unterschiedliche Anwendungsfälle mit geringem Aufwand anpassbar.

### Bezugszeichenliste:

- 1: Zylinder
- 2: Kolbenstange
- 3: Kraftaufnehmer
- 4: Druckluftquelle
- 5: Steuerleitung
- 6: Druckregelventil
- 7: Messfühler
- 8: Struktur
- 9: Längslenker
- 10: Längslenker
- 11: Querlenker
- 12: Querlenker
- 13: Querträger
- 14: Querträger
- 15: Druckfeder
- 16: Querabstützung
- 17: Querabstützung
- 18: Längsträger
- 19: Abstützung
- 20: Druckfeder
- 21: Fühlerelement
- 22: Schraube
- 23: Federteller
- 24: Längsschlitz
- 25: Schraube
- 26: Schraubenbund
- 27: Abstandsscheibe
- 28: Träger
- 29: Stellschraube
- 30: Schraubenfeder

## Patentansprüche

1. Kraftaufnehmer zur Messung einer Zugkraft (F) in einer pneumatischen Einrichtung,
mit einem Gelenkparallelogramm, das aus einem ersten und zweiten Längslenker (9, 10) und aus einem ersten und zweiten Querlenker (11, 12) gebildet ist, die jeweils mit Abstand parallel zueinander verlaufen und gelenkig miteinander verbunden sind,
wobei sich die beiden Längslenker (9, 10) parallel zur Richtung der Zugkraft (F) erstrecken und wobei die Zugkraft (F) an dem zweiten Längslenker (9) angreift und diesen in Richtung der Zugkraft (F) bewegt,
mit einem zwischen den beiden Querlenkern (11, 12) angeordneten, mit dem ersten Längslenker (10) fest verbundenen Messfühler (7) zur Erzeugung eines zugkraftabhängigen pneumatischen Drucksignals, der ein aus dem Messfühlergehäuse herausragendes Fühlerelement (21) aufweist,
das von einem Beaufschlagungselement in Abhängigkeit von der Zugkraft (F) kraftbeaufschlagbar ist, wobei entweder der zweite Längslenker (9) oder einer der beiden Querlenker (11, 12) das Beaufschlagungselement bildet,
**dadurch gekennzeichnet,**
**dass** mindestens ein erstes elastisches Element (Druckfeder 20) mit mindestens zwei der Lenker (Längs- (9, 10) und/oder Querlenker (11, 12)) derart verbunden ist, dass die zugkraftbedingte Bewegung des zweiten Längslenkers (9) gegen eine von dem ersten Element (Druckfeder 20) bewirkte elastische Kraft erfolgt, und
**dass** das mit mindestens einem zweiten elastischen Element (Druckfeder 15) in Reihe geschaltete Fühlerelement (21) am Beaufschlagungselement abgestützt ist.

2. Kraftaufnehmer nach Anspruch 1,
**dadurch gekennzeichnet,**
**dass** das erste und zweite elastische Element eine Druckfeder (15, 20) ist

3. Kraftaufnehmer nach Anspruch 2,
**dadurch gekennzeichnet**,
**dadurch gekennzeichnet, dass** die Druckfeder (15, 20) eine Tellerfeder ist

4. Kraftaufnehmer nach einem der Ansprüche 1 - 3,
**dadurch gekennzeichnet,**
**dass** jeder Längslenker (9, 10) außerhalb des Parallelogramms an einem seiner beiden Enden eine fest mit ihm verbundenen Querabstützung (16, 17) aufweist, an denen in Richtung der Längsachse des Messfühlers (7) die zu messende Zugkraft (F) bzw. die entsprechende Gegenkraft angreift.

5. Kraftaufnehmer nach einem der Ansprüche 1 - 4,
**dadurch gekennzeichnet,**
**dass** innerhalb des Parallelogramms an einem Querlenker (11) ein quer zu diesem verlaufender und fest mit diesem verbundener Längsträger (18) angeordnet ist, wobei zwischen dem unmittelbar gegenüberliegenden Längslenker (9) und dem Längsträger (18) das erste elastische Element abgestützt ist.

6. Kraftaufnehmer nach Anspruch 5,
**dadurch gekennzeichnet,**
**dass** die Abstützung (19) am Längslenker (9) längsverschiebbar und arretierbar ist.

7. Kraftaufnehmer nach einem der Ansprüche 5 oder 6,
**dadurch gekennzeichnet,**
**dass** an dem dem Längsträger (18) unmittelbar gegenüberliegenden Längslenker (9) eine Schraube befestigt ist, die zwei Anschläge (26, 27) aufweist, welche zur Begrenzung der Seitwärtsbewegung des Längsträgers (18) dienen.

## Claims

1. Force transducer for measuring a tensile force (F) in a pneumatic device,
having a linkage parallelogram which is formed from a first and second longitudinal link (9, 10) and from a first and second transverse link (11, 12) which links extend respectively at a spacing parallel to each other and are connected to each other in an articulated manner,
the two longitudinal links (9, 10) extending parallel to the direction of the tensile force (F) and the tensile force (F) being applied to the second longitudinal link (9) and moving the latter in the direction of the tensile force (F),
having a sensor (7), which is disposed between the two transverse links (11, 12) and connected in a fixed manner to the first longitudinal link (10), in order to produce a tensile force-dependent pneumatic pressure signal which has a sensor element (21) protruding from the sensor housing,
which sensor element can be supplied with a force by a supply element dependent upon the tensile force (F), either the second longitudinal link (9) or one of the two transverse links (11, 12) forming the supply element,
***characterised in that***
at least one first elastic element (pressure spring 20) is connected to at least two of the links (longitudinal links (9, 10) and/or transverse links (11, 12)) in such a manner that the tensile force-occasioned movement of the second longitudinal link (9) is effected in opposition to an elastic force effected by the first element (pressure spring 20) and
**in that** the sensor element (21) which is connected in series with at least one second elastic element (pressure spring 15) is supported on the supply element.

2. Force transducer according to claim 1,
***characterised in that***
the first and second elastic element is a pressure spring (15, 20).

3. Force transducer according to claim 2,
***characterised in that***
the pressure spring (15, 20) is a disc spring.

4. Force transducer according to one of the claims 1 - 3,
***characterised in that***
each longitudinal link (9, 10) has, outwith the parallelogram on one of its two ends, a transverse support (16, 17) which is securely connected thereto and to which the tensile force (F) to be measured or the corresponding counter-force is applied in the direction of the longitudinal axis of the sensor (7).

5. Force transducer according to one of the claims 1 - 4,
***characterised in that***
on one transverse link (11) within the parallelogram, a longitudinal carrier (18) which extends transversely to the latter and is connected in a fixed manner to the latter, is disposed, the first elastic element being supported between the longitudinal link (9), which is situated directly opposite, and the longitudinal carrier (18).

6. Force transducer according to claim 5,
***characterised in that***
the support (19) on the longitudinal link (9) is longitudinally displaceable and lockable.

7. Force transducer according to one of the claims 5 or 6,
***characterised in that***
a screw is secured to the longitudinal link (9) which is situated directly opposite the longitudinal carrier (18), which screw has two limit stops (26, 27) which serve to delimit the lateral movement of the longitudinal carrier (18).

## Revendications

1. Transducteur de force pour mesurer une force de traction (F) dans un dispositif pneumatique, comportant un parallélogramme articulé, qui est formé par des premier et second bras longitudinaux (9, 10) et par des premier et second bras transversaux (11, 12), qui, à chaque fois, s'étendent parallèlement l'un à l'autre à distance et sont reliés ensemble de façon articulée, les deux bras longitudinaux (9, 10) s'étendant parallèlement à la direction de la force de traction (F) et la force de traction (F) agissant sur le second bras longitudinal (9) et déplaçant celui-ci en direction de la force de traction (F), et comportant un capteur (7), agencé entre les deux bras transversaux (11, 12) et solidaire du premier bras longitudinal (10), pour engendrer un signal de pression pneumatique dépendant de la force de traction, qui présente un élément de capteur (21) faisant saillie du boîtier du capteur, qui peut être sollicité par une force, par un élément de sollicitation, de façon dépendant de la force de traction (F), soit le second bras longitudinal (9) ou un des deux bras transversaux (11, 12) formant l'élément de sollicitation,
**caractérisé en ce qu'**au moins un premier élément élastique (ressort de pression 20) est relié à au moins deux des bras [bras longitudinaux (9, 10) et/ou bras transversaux (11, 12)], de sorte que le déplacement lié à la force de traction du second bras longitudinal (9) est effectué à l'encontre d'une force élastique fournie par le premier élément (ressort de pression 20), et **en ce que** l'élément de capteur (21) monté en série avec au moins un second élément élastique (ressort de pression 15) s'appuie sur l'élément de sollicitation.

2. Transducteur de force selon la revendication 1,
**caractérisé en ce que** les premier et second éléments élastiques sont un ressort de pression (15, 20).

3. Transducteur de force selon la revendication 2,
**caractérisé en ce que** le ressort de pression (15, 20) est un ressort à disques.

4. Transducteur de force selon une des revendications 1 - 3,
**caractérisé en ce que** chaque bras longitudinal (9, 10) présente, à l'extérieur du parallélogramme, à une de ses deux extrémités, un appui transversal relié rigidement à celui-ci (16, 17), sur lequel agit, en direction de l'axe longitudinal du capteur (7), la force de traction (F) à mesurer ou la contre-force correspondante.

5. Transducteur de force selon une des revendications 1 - 4,
**caractérisé en ce que**, à l'intérieur du parallélogramme, sur un bras transversal (11), il est agencé un support longitudinal (18) s'étendant transversalement à celui-ci et relié rigidement à celui-ci, le premier élément élastique s'appuyant entre le bras longitudinal directement opposé (9) et le support longitudinal (18).

6. Transducteur de force selon la revendication 5,
**caractérisé en ce que** l'appui (19) sur le bras longitudinal (9) peut être déplacé longitudinalement et arrêté.

7. Transducteur de force selon une des revendications 5 ou 6,
**caractérisé en ce que**, sur le bras longitudinal (9) directement opposé au support longitudinal (18), il est fixé une vis qui présente deux butées (26, 27), lesquelles servent à limiter le mouvement latéral du support longitudinal (18).
